(19) Europäisches Patentamt
European Patent Office
Office européen des brevets

(11) Veröffentlichungsnummer: **0 006 543**
**B1**

# (12) EUROPÄISCHE PATENTSCHRIFT

(45) Veröffentlichungstag der Patentschrift: **22.04.81**

(51) Int. Cl.³: **G 03 C 1/02**

(21) Anmeldenummer: **79101945.8**

(22) Anmeldetag: **15.06.79**

## (54) Lichtempfindliches photographisches Material, Verfahren zu dessen Herstellung sowie Verwendung zur Herstellung photographischer Bilder.

(30) Priorität: **27.06.78 DE 2828112**

(43) Veröffentlichungstag der Anmeldung:
**09.01.80 Patentblatt 80/1**

(45) Bekanntmachung des Hinweises auf die Patenterteilung:
**22.04.81 Patentblatt 81/16**

(84) Benannte Vertragsstaaten:
**BE DE FR GB**

(56) Entgegenhaltungen:
**DE - A - 2 436 180**
**DE - C - 851 716**
**FR - A - 2 084 802**
**FR - A - 2 319 920**
**US - A - 3 021 215**
**US - A - 3 046 134**

**P. GLAFKIDES "Chimie et Physique Photographiques"; 4. Auflage 1976 Publications photo-cinema PAUL MONTEL, Seite 451 Paris, Fr.**

(73) Patentinhaber: **AGFA-GEVAERT Aktiengesellschaft**
**Patentabteilung**
**D-5090 Leverkusen 1 (DE)**

(72) Erfinder: **Lapp, Otto, Dr.**
**Heymannstrasse 28**
**D-5090 Leverkusen (DE)**
Erfinder: **Endres, Lothar, Dr.**
**Hoeffenstrasse 19**
**D-5060 Bergisch-Gladbach 2 (DE)**
Erfinder: **Hückstädt, Harold, Dr.**
**Gellerstrasse 12**
**D-5090 Leverkusen (DE)**
Erfinder: **Moll, Franz, Dr.**
**Euckenstrasse 5**
**D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 006 543 B1

Courier Press, Leamington Spa, England.

# Lichtempfindliches photographisches Material, Verfahren zu dessen Herstellung sowie Verwendung zur Herstellung photographischer Bilder

Die Erfindung betrifft ein lichtempfindliches photographisches Material mit mindestens einer Silberhalogenidemulsionsschicht, ein Verfahren zu dessen Herstellung sowie die Verwendung zur Herstellung photographischer Bilder. Insbesondere betrifft die Erfindung ein photographisches Material mit einer Emulsion enger Korngrößenverteilung.

Es ist bekannt, Emulsionen enger Korngrößenverteilung, im Spezialfall sogenannte monodisperse Emulsionen, herzustellen und beispielsweise für direkt positive photographische Materialen, aber auch für andere photographische Materialien einzusetzen.

Um derartige Emulsionen enger Korngrößenverteilung zu erhalten, bediennt man sich im allgemeinen des sogenannten "Doppeleinlaufverfahrens". Bei einem derartigen Verfahren werden die Silberhalogenidkörner dadurch hergestellt, daß man gleichzeitig eine wäßrige Lösung eines wasserlöslichen Silbersalzes, z.B. von Silbernitrat, und eines wasserlöslichen Halogenids, z.B. eines Alkalimetallhalogenids wie Kaliumbromid, in eine kräftig gerührte, wäßrige Lösung eines Silberhalogenid-Peptisierungsmittels, vorzugsweise Gelatine, eines Gelatinederivatives oder irgendeines anderen aus Proteinen bestehenden Peptisierungsmittels einlaufen läßt. Geeignete Verfahren dieser Art sind in der britischen Patentschrift 1 027 146 und in der Veröffentlichung von E. Moisar und S. Wagner in "Berichte der Bunsengesellschaft für physikalische Chemie", 67 (1963), Seiten 356 bis 359, beschrieben.

Bezeichnend für das Doppeleinlaufverfahren ist, daß hohe Halogenidüberschüsse vermieden werden müssen, um die sogenannte Ostwaldreifung zu verhindern, die zu einer heterodispersen Korngrößenverteilung führen würde. Aus dem gleichen Grunde ist auch der Zusatz anderer Silberhalogenid-Lösungsmittel nur in begrenzter Menge zulässig.

Problematisch bei dem Doppeleinlaufverfahren zur Herstellung von Emulsionen enger Korngrößenverteilung ist, daß sowohl pH- als auch pAg-Wert sorgfältig konstant gehalten werden müssen, um einerseits die unerwünschte Ostwaldreifung und andererseits die Bildung von Keimen zu verhindern, die wiederum Heterodispersität zur Folge hätten. Es ist deshalb notwendig, sehr sorgfältig darauf zu achten, daß die Einläufe des Silbersalzes und des Halogenids, die gleichzeitig vorgenommen werden, mit gleicher Konzentration und Volumengeschwindigkeit stattfinden. Vor allem muß dafür Sorge getragen werden, daß lokale Überkonzentrationen an den Einlaufstellen nicht auftreten. Somit stellt das Doppeleinlaufverfahren hohe Anforderungen an die Verfahrenstechnik, die besonders bei größeren Ansätzen nicht immer leicht zu erfüllen sind. Insbesondere ist es sehr schwierig, nach diesen Verfahren Silberhalogenidemulsionen enger Korngrößenverteilung mit höheren Jodidgehalten herzustellen. Bei Zufuhr größerer Jodidkonzentrationen besteht die Gefahr der Neukeimbildung und damit einer stärkeren Heterodispersität der Kristalle.

Aus der deutschen Offenlegungsschrift 2 043 392 und der US—A—4 026 668 ist zwar bekannt, die Fällungsbedingungen beim Doppeleinlaufverfahren, insbesondere die Konzentrationen, sowie den pH- und pAg-Wert in gewünschter Weise zu steuern. Diesen Methoden und Vorrichtungen ist jedoch gemeinsam, daß sie aufwendig und kompliziert sind.

Zur Herstellung von Silberhalogenidemulsionen sind auch Verfahren bekannt, Emulsionen unterschliedlicher Korngröße zu mischen und in Gegenwart von Silberhalogenidlösungsmitteln eine Umlösung zu erwirken. Eine Voraussetzung für derartige Verfahren ist, daß die bei der Umlösung verwendeten Silberhalogenidkristalle unterschiedliche Löslichkeiten aufweisen. Unterschiedliche Löslichkeiten können durch unterschiedliche Korngröße und/oder unterschiedliche Halogenidzusammensetzung hervorgerufen werden. Dearartige Verfahren sind bekannt aus der US—A—2 146 938, US—A— 3 206 313, US—A— 3 317 322, der deutschen Auslegeschrift 1 207 791, den Referaten von D. Markocki und W. Romer in Korpuskular Photographie, IV, (1963), Seiten 149 ff. sowie von Ondreichik in Zhurnal Nauchnoi Prikladnei Fotografi Kinematografi 5, No. 2 (1960) Seiten 81—83. Diese Umlösungsverfahren werden in Gegenwart von Silberhalogenidlösungsmitteln vorgenommen. Die bei diesen Verfahren verwendete leichter lösliche Silberhalogenidemulsion ist vorzugsweise eine feinkörnige Silberhalogenidemulsion mit einem mittleren Korndurchmesser, der kleiner ist als der der schwerer löslichen Silberhalogenidemulsion; besonders geeignet sind sogenannte Lippmann Emulsionen mit einem mittleren Korndurchmesser $<0{,}1\mu$.

Vorteilhaft an diesem Verfahren ist, daß eine Neukeimbildung praktisch vollständig vermieden wird. Weiterhin kann vollständig auf besondere apparative Vorkehrungen zur Vermeidung von Überkonzentrationen und auf Regelvorrichtungen für den pH- oder pAg-Wert verzichtet werden, da die leichter lösliche Emulsion bereits eine in optimaler Weise äquimolare Silberhalogenidquelle darstellt.

Nachteilig an dem von Markocki und Romer beschriebenen Verfahren ist, daß die schwerer löslichen Emulsionen hergestellt werden müssen, indem ein Teil der verwendeten Lippmann-Emulsion bei erhöhter Bromidionen-Konzentration einer Ostwaldreifung unterwofen wird, um auf diese Weise größere Silberhalogenidkörner zu erhalten. Hierbei entsteht naturgemäß eine Emulsion mit heterodisperser Korngrößenverteilung. Für die Herstellung von Emulsionen enger Korngrößenverteilung ist es dagegen von Vorteil, wenn auch die schwerer löslich Emulsionen bereits innerhalb einer engen Korngrößenverteilung vorliegen, bzw. homodispers sind. Ein weiterer, schwerwiegender Nachteil des

Verfahrens nach Markocki und Romer liegt darin, daß es für größere Emulsionsansätze praktisch unbrauchbar ist. Das Verfahren nach Markocki und Romer kann nämlich entweder durch kontinuierliche oder durch periodische Zugabe der Lippmann-Emulsion zur Keimemulsion durchgeführt werden. Beim kontinuierlichen Zugeben muß die feinkörnige Komponente unter außerordentlich kräftigem Rühren zugegeben werden, um die Entstehung heterodisperser Emulsionen zu vermeiden. Dieses ist bei größeren Ansätzen praktisch nicht realisierbar. Bei der periodischen Zugabe der Lippmann-Emulsion müssen zwischen den einzelnen Zugaben z.T. erheblichen Pausen eingehalten werden, um die Bildung heterodisperser System zu vermeiden. Somit ist auch diese Variante für die Praxis nicht geeignet. Weiter wird bei den bekannten Verfahren relativ wenig Jodid sowohl in der schwerer, als auch in der leichter löslichen Emulsion verwendet. Somit werden lediglich Emulsionen mit relativ geringem Jodidgehalt erhalten.

Eine Aufgabe der Erfindung ist es, ein verbessertes photographisches Material mit wenigstens einer lichtempfindlichen Silberhalogenidemulsionsschicht anzugeben, die gegenüber bekannten Methoden einfach herzustellen ist und auch einen höheren Jodidgehalt aufweisen kann. Eine weitere Aufgabe der Erfindung ist es insbesondere, eine Methode anzugeben, mit der Silberhalogenidemulsionen enger Korngröenverteilung in einfacher Weise hergestellt werden können.

Es wurde nun ein lichtempfindliches photographisches Material mit einem Schichtträger und mit wenigstens einer Silberhalogenidemulsionsschicht mit Silberhalogenidkörnern enger Korngrößenverteilung gefunden, bei dem die Silberhalogenidemulsion dadurch erhalten wird, daß

a) eine Ausgangssilberhalogenidemulsion enger Korngrößenverteilung mit einem wasserlöslichen Jodid, vorzugsweise einem Alkali- oder Ammoniumjodid, unter wenigstens teilweiser Konvertierung der Silberhalogenidemulsion behandelt wird und
b) die erhaltene Emulsion mit einem Silberhalogenidlösungsmittel digeriert wird, gegebenenfalls unter Zusatz weiterer Silberhalogenidemulsion, die leichter löslich als die konvertierte Ausgangsemulsion ist, unter Aufwachsen der leichter löslichen Emulsionsanteile auf die konvertierten Emulsionsanteile.

Weiterhin wurde gefunden, daß ein derartiges Material zur Herstellung photographischer Bilder durch Belichtung und Entwicklung geeignet ist.

Aus der DE—C— 851 716 sind Silberhalogenidemulsionen bekannt, die mit Hilfe eines wasserlöslichen Jodids konvertiert werden. Auf das konvertierte Silberhalogenid wird aber weiteres Silberhalogenid nicht aufgefällt.

Unter einer Emulsion mit einer engen Korngrößenverteilung wird hiermit eine Emulsion verstanden, bei der wenigstens 75% der Silberhalogenidkörner innerhalb einer Abweichung von maximal 50% vom mittleren Korndurchmesser liegen. In einer bevorzugten Ausführungsform sind die Silberhalogenidemulsionen monodispers, wobei unter mondispersen Emulsionen derartige verstanden werden, bei denen mindestens 95% der Silberhalogenidkörner innerhalb einer Abweichung von maximal 40% vom mittleren Korndurchmesser liegen.

Die mit dem wasserlöslichen Jodid zu behandelnde Emulsion kann ganz oder überwiegend aus Silberchlorid und/oder insbesondere aus Silberbromid bestehen. Sie kann aber auch Jodid in größeren Mengen enthalten.

In einer Ausführungsform der Erfindung legt man eine Lösung eines Dispersionsmittels, insbesondere Gelatine, sowie eine bestimmte Menge an Jodidionen, beispielsweise als Alkalijodid, vor und gibt zu dieser Lösung auf einmal oder nach und nach eine Lippmann-Emulsion enger Korngrößenverteilung, die überwiegend aus Silberbromid besteht, zu. Unter einer Lippmann-Emulsion wird hierbei eine Emulsion verstanden, deren Silberhalogenidkörner einen Durchmesser von maximal 0,1 $\mu$ haben. Diese Lippmann-Emulsion kann nach den üblichen Verfahren, insbesondere nach dem Doppeleinlaufverfahren, hergestellt werden.

Anschließend fügt man ein Silberhalogenidlösungsmittel zu. Bei dieser Variante dient die Lippmann-Emulsion als ihre eigene Vorfällung. Durch die vorgelegten Jodid-Ionen wird eine entsprechender Anteil der Lippmann-Emulsion konvertiert, auf die nicht konvertierten Anteile aufwachsen.

Es ist auch möglich, der vorgelegten Lösung des Dispersionsmittels und der Jodidionen zusätzlich bereits einen Teil des Silberhalogenidlösungsmittels zuzufügen. Vorzugsweise werden maximal 10 Mol-% des Silberhalogenidlösungsmittels, bezogen auf die eingesetzte Silberhalogenidmenge, zugefügt. Diese Verfahrensweise ist besondere dann zweickmäßige, wenn relativ wenig Jodid zugefügt werden soll.

Der mittlere Korndurchmesser der so erhaltenen Silberhalogenidkörner liegt vorzugsweise zwischen 0,4 $\mu$ und 1,5 $\mu$ und wird gesteuert durch die Wahl der Umlösebedingungen für die Lippmann-Emulsion, insbesondere durch die angewandte Temperatur und die zugesetzte Menge des Silberhalogenidlösungsmittels.

In einer zweiten, bevorzugten Ausführungsform der Erfindung wird mit einer separaten Vorfällung gearbeitet. Hierzu wird zunächst eine Emulsion enger Korngrößenverteilung hergestellt, die aus Silberbromid oder Silberchlorid oder aus Gemischen davon besteht. Silberjodid kann ebenfalls enthalten sein.

Diese Emulsionen werden nach den in der Emulsionstechnik bekannten Verfahren z.B. einfacher

oder doppelter Einlauf, ggf. pAg-gesteuert hergestellt. Erfindungsgemäß wird die so hergestellte Vorfällung vor oder nach der physikalischen Reifung mit einer Jodidsalzlösung behandelt und wenigstens teilweise konvertiert. Die Menge des zugesetzten Jodids ist dabei in weiten Grenzen variabel ohne daß eine unerwünschte Heterodispersität der Vorfällung bzw. der fertigen Emulsion entsteht.

Der Jodidgehalt der konvertierten Vorfällung liegt vorzugsweise zwischen 10 und 100 Mol-% bezogen auf das in der Vorfällung enthaltene Silber, vorzugsweise zwischen 15 und 75 mol-%. Die konvertierte Emulsion wird in der Folge als schwerer lösliche Emulsion bezeichnet.

Zu der derart hergestellten schwerer löslichen Emulsion wird eine leichter lösliche, in der Regel feinkörnige Emulsion, vorzugsweise eine Lippmann-Emulsion zugegeben, wobei diese leichter lösliche Emulsion vorzugsweise aus Silberchlorid, Silberbromid oder Mischungen hiervon und bis zu etwa 10 Mol-% Jodid, vorzugsweise kleiner als 6 Mol-% Jodid, besteht.

Ferner wird für das erfindungsgemäße Verfahren wenigstens ein Silberhalogenidlösungsmittel zugegeben. Die Menge des verwendeten Silberhalogenidlösungsmittels hängt von der Art des verwendeten Lösungsmittels und der angewandten Umlösetemperatur ab und läßt sich im allgemeinen in einer Versuchsreihe leicht ermitteln. Es werden im allgemeinen Werte zwischen 0,05 bis 2 Molar erreicht.

Die Mischung der schwerer und der leichter löslichen Emulsion wird in Gegenwart des Silberhalogenidlösungsmittels digeriert, bis die leichter lösliche Emulsion auf die schwerer lösliche Emulsion aufgewachsen ist. Das Verhältnis des in form der leichter löslichen Silberhalogenidemulsion zugeführten Silbers zu dem mit der schwerer löslichen Emulsion eingebrachten Silbers liegt vorzugsweise zwischen 0,3:1 bis 30:1, vorzugsweise 1:1 bis 15:1. Vor der Mischung der beiden Emulsionen wird vorzugsweise wenigstens eine der beiden Emulsionen z.B. nach einem der bei der Emulsionsherstellung üblichen Verfahren entsalzt und/oder konzentriert z.B. durch Flockung. Die Emulsionen können in geflocktem Zustand gemischt und gemeinsam redispergiert werden. In dieser bevorzugten Arbeitsweise lassen sich sehr hohe und im Vergleich zu konventionellen Emulsionen unübliche Silberkonzentrationen einstellen, ohne den Nachteil der hohen Salzkonzentration in Kauf nehmen zu müssen. Die Silberkonzentrationen bie der Umlösung können zwischen 0,2 bis 2 Mol Silber pro kg Emulsion liegen.

Die Zugabe der leichter löslichen Silberhalogenidemulsion zur schwerer löslichen Emulsion kann aber auch zu unterschiedlichen Zeiten und in mehreren Anteilen erfolgen. Eine weitere Möglichkeit ist die kontinuierliche Zugabe.

Eine weitere Ausführungsform besteht in einer alternierenden Arbeitsweise, wobei die Konvertierung und Umlösung mehrfach abwechselnd hintereinander durchgeführt werden. Auf diese Weise kann die topographische Verteilung des Jodids in gezielter und vorauszuberechnender Weise erfolgen.

Eine weitere Möglichkeit besteht in der Verwendung mehrerer leichter löslicher Emulsionen mit unterschiedlichem Halogenidgehalt, die nacheinander zu der konvertierten schwerer löslichen Emulsion gegeben werden. Dadurch ist es möglich, einen gezielten z.B. stufenweisen Jodidgradienten einzustellen.

Selbstverständlich kann auch die alternierende Arbeitsweise mit leichter löslichen Silberhalogenidemulsionen unterschiedlicher Halogenidzusammensetzung kombiniert werden.

Die Umlöseparameter wie pAg-Wert, pH-Wert und Temperatur können in weiten Grenzen variiert werden, wobei die Temperatur vorteilhafterweise zwischen 40 und 80 Grad und die Umlösezeit zwischen 5 und 90 Min gewählt wird. Der pAg-Wert beträgt vorzugsweise 6,5 bis 11,8.

Als Silberhalogenidlösungsmittel sind beispielsweise geeignete: Halogenide, vorzugsweise Alkali und Ammoniumhalogenide, insbesondere Bromide oder Chloride; Ammoniak; Thiocyanate, insbesondere Alkali oder Ammoniumthiocyanat; Sulfite, insbesondere Alkali oder Ammoniumsulfite; Thiosulfat; organische Amine; Thioether, Imidazol und Imidazolderivate. In einer bevorzugten Ausführungsform der Erfindung werden organische Thioether verwendet. Geeignete Thioether sind beispielsweise beschrieben in US-Patentschriften 3 271 157, 3 507 657, 3 531 289 und 3 574 628 und der deutschen Offenlegungsschrift 28 24 249.1. Besonders geeignete Thioether sind weiterhin beschrieben in der deutschen Offenlegungsschrift 2 614 862. Besonders geeignete Thioether entsprechen folgenden allgemeinen Formeln:

$$HO—(CH_2)_2—S—(CH_2)_2—S—(CH_2)_2—OH$$

$$HOOC—(CH_2)_3—S—(CH_2)_3—COOH$$

$$CH_3—S—(CH_2)_2—CHNH_2—COOH$$

$$CH_2H_5—S—(CH_2)_2—S—(CH_2)_2—NH—CO—(CH_2)_2COOH$$

$$C_2H_5—S—(CH_2)_2—S—(CH_2)_2—NH—CO—NH_2$$

Der Silberjodidgehalt der erfindungsgemäß erhaltenen Emulsion ist beliebig und liegt vorzugsweise zwischen 3 und 15 Mol-%.

Als Schutzkolloid bzw. Bindemittel für die Silberhalogenidemulsionsschicht sind die üblichen hydrophilen filmbildenden Mittel geeignet, z.B. Proteine, insbesondere Gelatine, Alginsäure oder deren Derivate wie Ester, Amide oder Salze, Cellulose-Derivate wie Carboxymethylcellulose und Cellulosesulfate, Stärke oder deren Derivate oder hydrophile synthetische Bindemittel wie Polyvinylalkohol, teilweise verseiftes Polyvinylacetat, Polyvinylpyrrolidon und andere. Die Schichten können im Gemisch mit den hydrophilen Bindemitteln auch andere synthetische Bindemittel in gelöster oder dispergierter Form enthalten wie Homo- oder Copolymerisate von Acryl- oder Methacrylsäure oder deren Derivaten wie Estern, Amiden oder Nitrilen, ferner Vinylpolymerisate wie Vinylester oder Vinyläther.

Für die erfindungsgemäßen Emulsionen können die üblichen Schichtträger verwendet werden, z.B. Träger aus Cellulose-estern wie Celluloseacetat oder Celluloseacetobutyrat, ferner Polyester, insbesondere Polyäthylenterephthalat oder Polycarbonate, insbesondere auf Basis von Bis-phenylolpropan. Geeignet sind ferner Papierträger, die gegebenenfalls wasserundurchlässige Polyolefinschichten, z.B. aus Polyäthylen oder Polypropylen, enthalten können, ferner Träger aus Glas oder Metall.

Die Emulsionen können auch chemisch sensibilisiert werden, z.B. durch Zusatz schwefelhaltiger Verbindungen bei der chemischen Reifung, beispielsweise Allylisothiocyanat, Allylthioharnstoff, Natriumthiosulfat und ähnliche. Als chemische Sensibilisatoren können ferner auch Reduktionsmittel, z.B. die in den belgischen Patentschriften 493 464 oder 568 687 beschriebenen Zinnverbindungen, ferner Polyamine wie Diäthylentriamin oder Aminomethylsulfinsäure-Derivate, z.B. gemäß der belgischen Patentschrift 547 323, verwendet werden.

Geeignete als chemische Sensibilisatoren sind auch Edelmetalle bzw. Edelmetallverbindungen wie Gold, Platin, Palladium, Iridium, Ruthenium oder Rhodium. Diese Methode der chemischen Sensibilisierung ist in dem Artikel von R. Koslowsky, Z.Wiss.Phot. *46*, 65—72 (1951), beschrieben.

Es ist ferner möglich, die Emulsionen mit Polyalkylenoxid-Derivaten zu sensibilisieren, z.B. mit Polyäthylenoxid eines Molekulargewichts zwischen 1 000 und 20 000, ferner mit Kondensationsprodukten von Alkylenoxiden und aliphatischen Alkoholen, Glykolen, cyclischen Dehydratisierungsprodukten von Hexitolen, mit alkylsubstituierten Phenolin, aliphatischen Carbonsäuren, aliphatischen Aminen, aliphatischen Diaminen und Amiden. Die Kondensationsprodukte haben ein Molekulargewicht von mindestens 700, vorzugsweise von mehr als 1 000. Zur Erzielung besonderer Effekte kann man diese Sensibilisatoren selbstverständlich kombiniert verwenden, wie in der belgischen Patentschrift 537 278 und in der britischen Patentschrift 727 982 beschrieben.

Die Emulsionen können auch optisch sensibilisiert sein, z.B. mit den üblichen Polymethinfarbstoffen wie Neutrocyanine, basischen oder sauren Carbocyaninen, Rhodacyaninen, Hemicyaninen, Styrylfarbstoffen, Oxonolen und ähnlichen. Derartige Sensibilisatoren sind in dem Werk von F. M. Hamer "The Cyanine Dyes and related Compounds", 1964, Interscience Publishers, John Wiley and Sons, beschrieben.

Die Emulsionen können die üblichen Stabilisatoren enthalten, wie z.B. homöopolare oder salzartige Verbindungen des Quecksilbers mit aromatischen oder heterocyclischen Ringen wie Mercaptotriazole, einfache Quecksilbersalze, Sulfoniumquecksilberdoppelsalze und andere Quecksilberverbindungen. Als Stabilisatoren sind ferner geeignet Azaindene, vorzugsweise Tetra- oder Pentaazaindene, insbesondere solche, die mit Hydroxyl- oder Aminogruppen substituiert sind. Derartige Verbindungen sind in dem Artikel von Birr, Z.Wiss.Phot. *47* (1952), 2—58, beschrieben. Weitere geeignete Stabilisatoren sind u.a. heterocyclische Mercaptoverbindungen, z.B. Phenylmercaptotetrazol, quaternäre Benzthiazol-Derivative und Benzotriazol.

Die Emulsionen können in der üblichen Weise gehärtet sein, beispielsweise mit Formaldehyd oder halogensubstituierten Aldehyden, die eine Carboxylgruppe enthalten wie Mucobromsäure, Diketonen, Methansulfonsäureester und Dialdehyden.

Weiterhin können die photographischen Schichten mit Härtern des Epoxityps, des heterocyclischen Äthylenimins oder des Acryloyltyps gehärtet werden. Beispiele derartiger Härter sind z.B. in der deutschen Offenlegungsschrift 2 263 602 oder in der britischen Patentschrift 1 266 655 beschrieben. Weiterhin ist es auch möglich, die Schichten gemäß dem Verfahren der deutschen Offenlegungsschrift 2 218 009 zu härten, um farbphotographische Materialien zu erzielen, die für eine Hochtemperaturverarbeitung geeignet sind.

Es ist ferner möglich, die photographischen Schichten bzw. die farbphotographischen Mehrschichtenmaterialien mit Härtern der Diazin-, Triazin- oder 1,2-Dihydrochinolin-Reihe zu härten, wie in den britischen Patentschriften 1 193 290, 1 251 091, 1 306 544, 1 266 655, der französischen Patentschrift 71 02 716 oder der deutschen Offenlegungsschrift 2 332 317 beschrieben ist. Beispiele derartiger Härter sind alkyl- oder arylsulfonylgruppenlhaltige Diazin-Derivate, Derivate von hydrierten Diazinen oder Triazinen, wie z.B. 1,3,5-Hexahydrotriazin, fluorsubstituierte Diazin-Derivate, wie z.B. Fluorpyrimidin, Ester von 2-substituierten 1,2-Dihydrochinolin- oder 1,2-Dihydroisochinolin-N-carbonsäuren. Brauchbar sind weiterhin Vinylsulfonsäurehärter, Carbodiimid- oder Carbamoylhärter, wie z.B. in den deutschen Offenlegungsschriften 2 263 602, 2 225 230 und 1 808 685, der französischen Patentschrift 1 491 807, der deutschen Patentschrift 872 153 und der DDR-Patentschrift 7218 beschreiben. Weitere brauchbare Härter sind beispielsweise in der britischen Patentschrift 1 268 550 beschrieben.

Die vorliegende Erfindung kann sowohl für die Herstellung schwarz-weißer als auch farbiger photographischer Bilder angewendet werden. Farbige photographische Bilder können z.B. nach dem bekannten Prinzip der chromogenen Entwicklung in Anwesenheit von Farbkupplern, die mit dem Oxidationsprodukt von farbgebenden p-Phenylendiamin-Entwicklern unter Bildung von Farbstoffen reagieren, hergestellt werden.

Die Farbkuppler können beispielsweise dem Farbentwickler nach dem Prinzip des sogenannten Einentwicklungsverfahrens zugesetzt werden. In einer bevorzugten Ausführungsform enthält das photographische Material selbst die üblichen Farbkuppler, die in der Regel den Silberhalogenidschichten einverleibt sind. So kann die rotempfindliche Schicht beispielsweise einen nicht-diffundierenden Farbkuppler zur Erzeugung des blaugrünen Teilfarbenbildes enthalten, in der Regel einen Kuppler vom Phenol- oder α-Naphtholtyp. Die gründempfindliche Schicht kann beispielsweise mindestens einen nicht-diffundierenden Farbkuppler zur Erzeugung des purpurnen Teilfarbenbildes enthalten, wobei üblicherweise Farbkuppler vom Typ des 5-Pyrazolons oder des Imidazolons Verwendung finden. Die blauempfindliche Schicht kann beispielsweise einen nicht-diffundierenden Farbkuppler zur Erzeugung des gelben Teilfarbenbildes, in der Regel einen Farbkuppler mit einer offenkettigen Ketomethylengruppierung enthalten. Farbkuppler dieser Art sind in großer Zahl bekannt und in einer Vielzahl von Patentschriften beschrieben. Beispielhaft sei hier auf die Veröffentlichung "Farbkuppler" von W. Pelz in "Mitteilungen aus den Forschungslaboratorien der Agfa, Leverkusen/München", Band III (1961) und K. Venkataraman in "The Chemistry of Synthetic Dyes", Vol. 4, 341—387, Academic Press, 1971, hingewiesen.

Als weitere nicht-diffundierende Farbkuppler können 2-Äquivalentkuppler verwendet werden; diese enthalten in der Kupplungsstelle einen abspaltbaren Substituenten, so daß sie zur Farbbildung nur zwei Äquivalente Silberhalogenid benötigen im Unterschied zu den üblichen 4-Äquivalentkupplern. Zu den einsetzbaren 2-Äquivalentkupplern gehören beispielsweise die bekannten DIR-Kuppler, bei denen der abspaltbare Rest nach Reaktion mit Farbentwickleroxidationsprodukten als diffundierender Entwicklungsinhibitor in Freiheit gesetzt wird. Weiterhin können zur Verbesserung der Eigenschaften des photographischen Materials die sogenannten Weißkuppler eingesetzt werden.

Die nicht-diffundierenden Farbkuppler und farbgebenden Verbindungen werden den lichtempfindlichen Silberhalogenidemulsionen oder sonstigen Gießlösungen nach üblichen bekannten Methoden zugesetzt. Wenn es sich um wasser- oder alkalilösliche Verbindungen handelt, können sie den Emulsionen in Form vom wäßrigen lösungen, gegebenenfalls unter Zusatz von mit Wasser mischbaren organischen Lösungsmitteln wie Äthanol, Aceton oder Dimethylformamid, zugesetzt werden. Soweit es sich bei den nicht-diffundierenden Farbkupplern und farbgebenden Verbindungen um wasser- bzw. alkaliunlösliche Verbindungen handelt, können sie in bekannter Weise emulgiert werden, z.B. indem eine Lösung dieser Verbindungen in einem niedrigsiedenden organischen Lösungsmittel direkt mit der Silberhalogenidemulsion oder zunächst mit einer wäßrigen Gelatinelösung vermischt wird, worauf das oganische Lösungsmittel in üblicher Weise entfernt wird. Ein so erhaltenes Gelatineemulgat der jeweiligen Verbindung wird anschließend mit der Silberhalogenidemulsion vermischt. Gegebenenfalls verwendet man zur Einemulgierung derartiger hydrophober Verbindungen zusätzlich noch sogenannte Kupplerlösungsmittel oder Ölformer; das sind in der Regel höhersiedende organische Verbindungen, die die in den Silberhalogenidemulsionen zu emulgierenden, nicht-diffundierenden Farbkuppler und Entwicklungsinhibitor abspaltenden Verbindungen in Form öliger Tröpfchen einschließen. Verwiesen sei in diesem Zussamenhang beispielsweise auf die US-Patentschriften 2 322 027, 2 533 514, 3 689 271, 3 764 336 und 3765 897.

Erfindungsgemäß hergestelltes photographisches Material kann mit den üblichen Farbentwicklersubstanzen entwickelt werden, z.B.

N,N-Dimethyl-p-phenylendiamin
4-Amino-3-methyl-N-äthyl-N-methoxyäthylanilin
2-Amino-5-diäthylaminotoluol
N-Butyl-N-ω-sulfobutyl-p-phenylendiamin
2-Amino-5-(N-äthyl-N-β-methansulfonamidäthyl-amino)-toluol
N-Äthyl-N-β-hydroxyäthyl-p-phenylendiamin
N,N-Bis-(β-hydroxyäthyl)-p-phenylendiamin
2-Amino-5-(N-äthyl-N-β-hydroxyäthylamino)-toluol.

Weitere brauchbare Farbentwickler sind beispielsweise beschrieben in J.Amer.Chem.Soc. *73*, 3100 (1951).

Die erfindungsgemäß hergestellten Emulsionen können in der verschiedensten Weise verwendet werden. Sie können verwendet werden für die Herstellung von photographischen Negativmaterialien aber auch für die Herstellung von photographischen Materialien mit unverschleierten, direktpositiven Silberhalogenidemulsionen, d.h. solchen, die eine relativ hohe Innenkornempfindlichkeit ohne oberflächlichen Schleier besitzen, und die unter verschleiernden Bedingungen entwickelt werden.

Die erfindungsgemäßen Emulsionen können für Color-Sofortbild-Verfahren bzw. Farbübertragungsverfahren in an sich bekannter Weise verwendet werden. Bei diesen Verfahren diffundieren die Farbstoffe für die Teilfarbenbilder in eine Bildempfangsschicht, wo sie fest verankert werden, oder die Farbkuppler diffundieren in die Bildempfangsschicht, wo sie nach üblicher farbgebender Entwicklung zu dem Bildfarbstoff umgesetzt werden. Farbübertragungsverfahren und in solchen Verfahren verwendete

Kuppler sind ferner in den US-Patentschriften 2 983 606, 3 807 817, 3 185 567, 3 227 550, 3 227 551, 3 227 552, 3 227 554, 3 253 915, 3 415 644, 3 415 645 und 3 415 646 beschrieben.

Die erfindungsgemäßen Emulsionen können auch für Farbübertragsverfahren verwendet werden, bei denen in der jeweiligen Schicht eine diffusionsfest eingelagerte Verbindung vorhanden ist, die einen Farbstoff oder ein Farbstoffvorprodukt darstellt und die bei der Entwicklung in Gegenwart der alkalischen Verarbeitungsmasse unter der Einwirkung von bildmäßig entstehenden Oxidationsprodukten von photographischen Entwicklern diffundierende, vorzugsweise Säuregruppen enthaltende Farbstoffe, abspaltet.

Hierfür stehen die verschiedenstens chemischen Verbindungen zur Verfügung. Besonders geeignet sind beispielsweise diffusionsfeste farbgebende Substanzen gemäß der US-Patentschrift 3 628 952. Diese Verbindungen spalten bei der Reaktion mit Oxidationsprodukten von Schwarz-Weiß- oder Farbentwicklern diffusionsfähige Farbstoffe ab. Eine weitere brauchbare Verbindungsklasse ist in der deutschen Patentschrift 1 095 115 beschrieben. Die hier genannten Verbindungen ergeben bei der Reaktion mit oxidiertem Farbentwickler diffusionsfähige Farbstoffe, die im allgemeinen zur Klasse der Azomethinfarbstoffe gehören. Ein weiteres brauchbares farbgebendes System ist in den US-Patentschriften 3 443 939 und 3 443 940 beschrieben. Bei diesem System werden unter der Einwirkung von oxidierten Entwicklersubstanzen unter Ringschlußbildung diffusionsfähige Farbstoffe abgespalten.

Die erfindungsgemäßen photographischen Materialien eignen sich somit hervorragend für die Herstellung photographischer Bilder durch bildmäßige Belichtung, Entwicklung und übliche Weiterverarbeitung.

Die erfindungsgemäßen Materialien zeichnen sich dadurch aus, daß sie wenigstens eine Silberhalogenidemulsion enger Korngrößenverteilung bei beliebigen und insbesondere höheren Jodidgehalten aufweist. In einer bevorzugten Ausführungsform weisen die erfindungsgemäß hergestellten Emulsionen eine hohe Inhibierbarkeit auf und sind somit insbesondere zur Erzielung hoher Interimageeffekte geeignet. Der Interimageeffekt wird üblicherweise zur Verbesserung der sensitometrischen Eigenschaften von photographischen Materialien ausgenutzt und wird beispielsweise beschrieben in dem entsprechenden Artikel von C. R. Barr in "Photographic Science and Engineering" 13 (1969), Seite 74 ff.

Beispiel 1

Zunachst wird eine Lippmann-Emulsion hergestellt gemäß dem von W. Markocki angegebenen Verfahren (Korpuluskar Photographie, IV (1963), Seite 165) mit der Abänderung, daß kein Cadmiumnitrat verwendet wird. Die Körner der Lippmann-Emulsion weisen einen mittleren Korndurchmesser von 0,07 $\mu$ auf. 1500 g der erhaltenen Lippmann-Emulsion mit der 340 g Silbernitrat entsprechenden Menge Silberhalogenid werden bei 45°C innerhalb von 10 Minuten zu einer Lösung von 22,5 g Kaliumjodid und 120 g einer hemm- und reifkörperhaltigen Gelatine in 5 l destilliertem Wasser zugefügt.

Nach Konvertierung der Lippman-Emulsion durch die vorgelegten Jodidionen werden 375 ml einer 14,7 molaren Ammoniaklösung hinzugefügt. Nach einer Digestionszeit von 30 Minuten bei 45°C wird die Emulsion in bekannter Weise abgekühlt und mit verdünnter Schwefelsäure auf pH 5,0 eingestellt. Dann wird die Emulsion in bekannter Weise koaguliert, gewaschen und schließlich unter Zusatz von Wasser und Gelatine der oben angegebenen Art bei einem pH-Wert von 6,5 in bekannter Weise redispergiert und danach mit einem Goldrhodanidkomplexsalz nach üblichem Verfahren chemisch sensibilisiert. Zur Nachreifung wird bei einer Temperatur von 53°C digeriert und abschließend in üblicher Weise Phenol zur Konservierung zugesetzt.

Die erhaltene Emulsion weist eine enge Korngrößenverteilung auf, wobei der mittlere Korndurchmesser 0,58 $\mu$ beträgt. In Abbildung 1 wird die sogenannte Summenhäufigkeitskurve für diese Emulsionen dargestellt. Jeder Punkt auf der Ordinate dieser Kurve gibt an, wieviel Prozent der Kristalle größer als der zuzuordnende Abszissenwert sind.

Zur Bestimmung der sensitometrischen Eigenschaften wird eine Probe der Emulsion auf einen geeigneten Träger gegossen, wobei vor dem Guß jeweils auf je ein kg der Emulsionsproben 20 ml 1%ige wäßrige Lösung von 4-Hydroxy-6-methyl-1,3,3a,7-tetraazainden 35 ml 7,5%ige wäßrige Lösung von Saponin und 35 ml 2%ige wäßrige Lösung von Mucochlorsäure gegeben werden. Das erhaltene photographische Material wird in üblicher Weise durch einen Graukeil bildmäßig belichtet und bei 20°C 7 Minuten lang in dem folgenden Entwickler entwickelt:

Entwickler

| | | |
|---|---|---|
| Äthylendiamintetraessigsäure | 1,5 | g |
| Natriumhexamethaphosphat | 1 | g |
| Natriumsulfit, sicc. | 60 | g |
| Borax | 15 | g |
| Kaliumbromid | 3 | g |
| Hydrochinon | 6 | g |
| 1-Phenyl-3-pyrazolidon | 0,7 | g |

mit Wasser auf 1 l.

Es werden die aus Tabelle 1 ersichtlichen Werte erhalten.

Beispiel 2

Zur Herstellung einer Emulsion wird in der gleichen Art, wie in Beispiel 1 angegeben, verfahren, mit der Abänderung, daß lediglich 750 g der angegebenen Lippmann-Emulsion zu der angegebenen Lösung von Kaliumjodid und Gelatine in 5 l destilliertem Wasser zugegeben wird. Die erhaltene Emulsion wird in der gleichen Weise wie im Beispiel 1 angegeben weiterverarbeitet. Abbildung 2 zeigt die Summenhäufigkeitskurve der erhaltenen Emulsion, mit einem mittleren Korndurchmesser von 0,65 $\mu$. Die sensitometrischen Werte nach Belichtung und Verarbeitung gemäß Beispiel 1 gehen aus Tabelle 1 hervor.

TABELLE 1

| Beispiel | $\gamma$ | E | S | $D_{max}$ | Ag-Auftrag (g $AgNO_3/m^2$) |
|---|---|---|---|---|---|
| 1 | 1,92 | 27,7 | 0,10 | 3,75 | 7,2 |
| 2 | 1,65 | 31,3 | 0,06 | 3,70 | 7,4 |

$\gamma$ = Gradation
E = Empfindlichkeit; eine Steigerung um 3,0 Einheiten bedeutet eine Verdoppelung der Empfindlichkeit
S = Schleier
$D_{max}$ = maximale Dichte

Beispiel 3

A) Eine Emulsion nach Beispiel 1 wird in bekannter Weise geschmolzen und mit 180 g pro Mol Silberhalogenid eines Sensibilisators der Formel

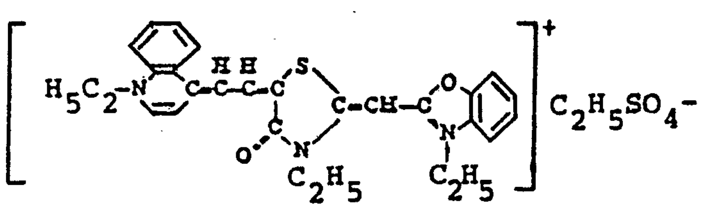

versetzt. Weiterhin werden zugegeben:

1.) 50 g des Blaugrün-Farbkupplers der Formel

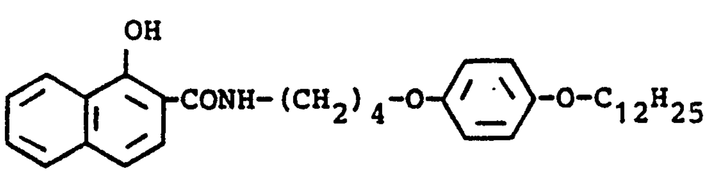

pro Mol Silber gerechnet als $AgNO_3$.

2.) 1,5 g 4-Hydroxy-6-methyl-1,3,3a,7-tetraazainden pro Mol Silber gerechnet als Silbernitrat sowie ein Netzmittel.

Die Emulsion wird auf eine Unterlage aus Celluloseacetat vergossen (Silberauftrag, berechnet als $AgNO_3$; 3,7 g/m²).

Nach dem Trocknen und Belichten hinter einem Stufenkeil und einem geeigneten Filter in einem Sensitometer wird das das Material im folgenden Entwickler für 3 1/4 Minuten bei 38°C entwickelt:

Entwickler:

| | |
|---|---|
| Kaliumsulfit | 5 g |
| Kaliumbromid | 1,4 g |
| Kaliumcarbonat | 35 g |
| Äthylendiamintetraessigsäure | 1,5 g |
| Dinatriumsalz der 1-Hydroxyäthan-1,1-diphosphonsäure | 2 g |
| Natriummetabisulfit | 0,28 g |
| Natriumbicarbonat | 1,55 g |
| 4-Amino-3-methyl-N-äthyl-N-(β-hydroxyäthyl)anilin | 4,7 g |
| Hydroxylaminsulfat | 2,4 g |
| mit Wasser auf 1 l. | |

Nach der Entwicklung wird wie üblich weiterverarbeitet.

B) Wie unter A) wird eine Emulsion aufgeschmolzen und weiterverarbeitet. Zusätzlich werden noch 4 g pro Mol Silber gerechnet als Silbernitrat eines DIR—Kupplers der folgenden Formel zugesetzt:

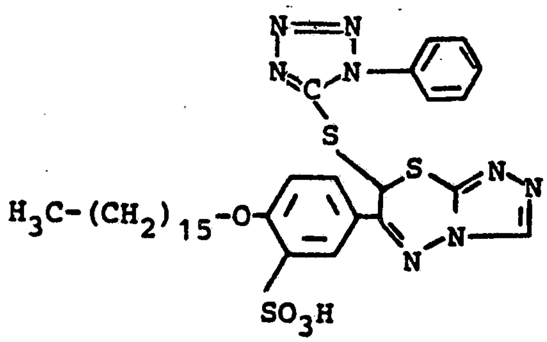

Die weitere Behandlung und Entwicklung erfolgt wie unter A) beschrieben.

Abbildung 3 zeigt die erhaltenen Schwärzungskurven. Man sieht, daß die Emulsion in ausgeprägter Weise auf den durch den DIR—Kuppler abgespaltenen Stabilisator reagiert.

Aus der Tabelle 2 gehen die sensitometrischen Daten hervor.

TABELLE 2

| Material | E | $\gamma$ | S |
|---|---|---|---|
| A, ohne DIR—Kuppler | 34,0 | 1,70 | 0,14 |
| B, mit DIR—Kuppler | 28,9 | 0,84 | 0,14 |

$\gamma$ = Gradation

Beispiel 4

Eine Silberchlorid/bromidemulsion mit 52 Mol-% Bromid wird entsprechend den Angaben von Glafkides (P. Glafkides Photographic Chemistry Fountain Press S. 341 u. ff 1958) hergestellt, so daß die mittlere Korngröße 0,35 $\mu$ beträgt. Nach beendeter Kornfällung wird der Emulsion langsam 12 Mol-% Jodid, bezogen auf das gefällte Silberhalogenid, in Form einer 10% wässrigen Kaliumjodidlösung zugegeben und digeriert. Die Emulsion wird abgekühlt, ausgeflockt und gewaschen. Das Flockulat wird anschließend wieder redispergiert. Die so hergestellte Emulsion enthält pro kg 1,1 Mol Silberhalogenid. Das Gelatine-Silberverhältnis beträgt 0,3.

Zu 1 kg dieser Emulsion werden 500 ml Wasser, 35 g $NH_4Br$ zugefügt. Weiter werden der Emulsion 500 ml einer 7-% Methioninlösung zugesetzt. Die Lösung wird auf 65°C hochgeheizt und während 30 Min. werden 1,1 Mol einer AgBr Lippmann-Emulsion zugegeben. Nach beendeter Zufuhr der Lippmann-Emulsion wird eine Pause von 15 Min. bei 65°C angefügt.

Die Lösung wird dann abgekühlt, geflockt, gewaschen und redispergiert. Die Emulsion enthält 1,3 Mol Silberhalogenid pro kg. Der Jodidgehalt der Emulsion beträgt 6 Mol-%. Der Emulsion wird nun eine Gelatinelösung, sowie Thiosulfat und Goldsalze zugestetzt, auf 54°C hochgeheizt und chemisch gereift. Die fertige Emulsion hat ein Gelatine/Silberverhältnis von 1,0.

Anschließend wird die Emulsion mit 35 mg Triazindolizin und 200 mg Saponin versetzt, auf einen Träger aus Acetylcellulose vergossen und in dem in Beispiel 1 angegebenen Entwickler entwickelt. Es wird eine mittelempfindliche feinkörnige Emulsion erhalten.

Beispiel 5

Entsprechend den Angaben von Glafkides wird eine ammoniakalische Silberbromid/jodidemulsion mit 3 Mol-% Jodid hergestellt. Nach der Fällung werden der Emulsion 19 Mol-% Jodid in Form einer 10% wässrigen Kaliumjodidlösung zugegeben bezogen auf des gefällte Silberhalogenid. Es werden kugelige Halogensilberkörner von sehr einheitlicher Korngröße erhalten, wobei der mittlere Korndurchmesser etwa 0,55 $\mu$ beträgt.

Die Emulsion wird geflockt und geswaschen und redispergiert. Die Emulsion enthält 1,1 Mol Silberhalogenid/kg. Das Gelatine-Silberverhältnis ist 0,35.

Zu dieser Emulsion werden 500 ml Wasser, 30 g Ammoniumbromid und 350 ml einer 7-%igen Imidazollösung gegeben. Anschließend werden bei 65°C über einen Zeitraum von 30 Min. 2,2 Mol einer Silberbromid/jodid-Lippmann-Emulsion (Br: J = 96:4) zugegeben. Nach beendetem Einlauf werden noch einmal 2,2 Mol einer AgBr Lippmann Emulsion zugegeben. Es wird eine Emulsion mit 6 Mol-% Jodid erhalten.

Die Emulsion wird geflockt, gewaschen, redispergiert und auf ein Gelatine-Silberverhältnis von 1,0 gebracht. Es wird in bekannter Weise mit einer Schwefel-Goldreifung bis zur Maximalempfindlichkeit gereift.

Die fertige Emulsion wird mit Triazaindolizin und Saponin versetzt und auf einen Träger aus Acetylcellulose vergossen. Die Schutzschicht wird zusätzlich mit Formalin versetzt. Die Schichten werden belichtet und wie in Beispiel 4 entwickelt. Es wird eine hohe Empfindlichkeit bei feinem Korn erhalten. Die Emulsion zeigt einen sehr hohen Kontrast.

Beispiel 6

Im Doppeljetverfahren wird eine Bromjodsilberemulsion enger Kornverteilung mit 6 Mol-% Jodid hergestellt. Die Korngröße beträgt 0,18 $\mu$. Nach der Kornfällung wird zu der Emulsion 42 Mol-% Jodid bezogen auf das gefällte Silberhalogenid in Form einer wässrigen Kalimjodidlösung gegeben.

Die Emulsion wird anschließend geflockt, gewaschen und redispergiert.

Die Emulsion enthält pro kg 1,4 Mol Silberhalogenid. Zu der redispergierten Emulsion werden 500 ml Wasser, 75 g $NH_4Br$ und 1500 ml einer 7-% Methioninlösung gegeben. Zu dieser Emulsion werden innerhalb 5 Min. 9,8 Mol einer AgBr-Lippmann Emulsion gegeben.

Anschließend wird bei 65°C 45 Minuten digeriert. Die Emulsion wird dann abgekühlt, geflockt, redispergiert und auf ein Gelatine/Silberverhältnis von 0,7 gebracht. Mit einer üblichen Schwefel-Goldreifung wird bis zur Maximalempfindlichkeit gereift.

Es wird eine Emulsion mit 6 Mol-% Jodid erhalten, wobei die mittlere Korngröße, 0,45 $\mu$ beträgt.

**Patentansprüche**

1. Lichtempfindliches fotografisches Material mit wenigstens einer jodidhaltigen Silberhalogenidemulsionsschicht einer engen Korngrößenverteilung, die aus einer Ausgangssilberhalogenidemulsion mit einem wasserlölichen Jodid unter wenigstens teilweiser Konvertierung hergestellt worden ist, dadurch gekennzeichnet, daß es eine Silberhalogenidemulsionsschicht enthält, deren konvertierte Ausgangssilberhalogenidemulsion gegebenenfalls unter Zusatz weiterer Silberhalogenidemulsion, die leichter löslich als die konvertierte Ausgangssilberhalogenidemulsion ist, in Gegenwart eines Silberhalogenidlösungsmittels digeriert worden ist, bis die leichter löslichen Emulsionsanteile auf die konvertierten Ausgangssilberhalogenidemulsionsanteile aufgewachsen sind.

2. Material nach Anspruch 1, dadurch gekennzeichnet, daß die Ausgangsemulsion wenigstens 10 Mol-% Silberjodid enthält.

3. Material nach Anspruch 1, dadurch gekennzeichnet, daß mindestens 75% der Silberhalogenidkörner der fertigen Silberhalogenidemulsion einen Durchmesser haben, der nicht mehr als 50% vom mittleren Durchmesser abweicht.

4. Material nach Anspruch 1, dadurch gekennzeichnet, daß Farbkuppler enthalten sind.

5. Material nach Anspruch 1, dadurch gekennzeichnet, daß die Ausgangssilberhalogenidemulsion einen mittleren Korndurchmesser von maximal 0,1 $\mu$m hat.

6. Material nach Anspruch 1, dadurch gekennzeichnet, daß eine Silberhalogenidemulsion verwendet wird, zu deren Herstellung wenigstens die konvertierte Ausgangsemulsion oder die zugegebene leichter lösliche Emulsion vor der Zugabe der leichter löslichen Emulsion konzentriert und/oder entsalzt wurde.

7. Material nach Anspruch 1, dadurch gekennzeichnet, daß das molare Verhältnis des in Form der leichter löslichen Emulsion eingebrachten Silbers zu dem des in Form der konvertierten Ausgangsemulsion eingebrachten Silbers zwischen 0,3:1 und 30:1 liegt.

8. Material nach Anspruch 1, dadurch gekennzeichnet, daß es eine Silberhalogenidemulsionsschicht enthält, in der das Konvertieren, gegebenenfalls Zusetzen leichter löslicher Silberhalogenidemulsion und das Digerieren mehr als einmal hintereinander durchgeführt worden ist.

9. Verfahren zur Herstellung eines lichtempfindlichen fotographischen Materials durch Aufbringen einer jodidhaltigen Silberhalogenidemulsionsschicht enger Korngroßenverteilung, die aus einer Ausgangssilberhalogenidemulsion mit einem wasserlöslichen Jodid unter wenigstens teilweiser Konvertierung hergestellt worden ist, auf einen Schichtträger, dadurch gekennzeichnet, daß die konvertierte Ausgangssilberhalogenidemulsion gegebenenfalls unter Zusatz weiterer Silberhalogenidemulsion, die leichter löslich als die konvertierte Ausgangssilberhalogenidemulsion ist, in Gegenwart eines Silberhalogenidlösungsmittels digeriert wird, bis die leichter löslichen Emulsionsanteile auf die konvertierten Ausgangssilberhalogenidemulsionsanteile aufgewachsen sind.

10. Verwendung des Materials nach Anspruch 1 zur Herstellung fotografischer Bilder durch bildmäßiges Belichten und Entwicklung.

**Revendications**

1. Matériau photographique sensible à la lumière comportant au moins une couche d'émulsion d'halogénure d'argent de granulométrie étroite contenant de l'iodure, qui a été préparée à partir d'une émulsion d'halogénure d'argent de départ avec un iodure soluble dans l'eau avec conversion au moins partielle, ledit procédé étant caractérisé en ce qu'il contient une couche d'halogénure d'argent dont l'emulsion d'halogénure d'argent de départ convertie a été mûrie en présence d'un solvant de l'halogénure d'argent, éventuellement avec une nouvelle addition d'émulsion d'halogénure d'argent qui est plus soluble que l'émulsion d'halogénure d'argent de départ convertie, jusqu'à ce que les fractions d'émulsion plus facilement solubles aient grossi sur les fractions d'émulsion d'halogénure d'argent de départ converties.

2. Matériau selon la revendication 1, caractérisé en ce que l'emulsion de départ contient au moins 10 moles % d'iodure d'argent.

3. Matériau selon la revendication 1, caractérisé en ce qu'au moins 75% en poids des grains d'halogénure d'argent de l'émulsion d'halogénure d'argent finale ont un diamètre qui ne s'écarte pas de plus de 50% du diamètre moyen.

4. Matériau selon la revendication 1, caractérisé en ce qu'il contient des coupleurs chromogènes.

5. Matériau selon la revendication 1, caractérisé en ce que l'émulsion d'halogénure d'argent de départ a un diamètre moyen de grain de 0,1 $\mu$ au maximum.

6. Matériau selon la revendication 1, caractérisé en ce qu'on utilise une émulsion d'halogénure d'argent pour la préparation de laquelle on a concentré et/ou déminéralisé l'émulsion de départ convertie ou l'émulsion plus soluble ajoutée avant l'addition de l'émulsion plus soluble.

7. Matériau selon la revendication 1, caractérisé en ce que le rapport molaire de l'argent introduit sous forme de l'emulsion plus soluble à l'argent introduit sous forme de l'émulsion de départ convertie est comprise entre 0,3:1 et 30:1.

8. Matériau selon la revendication 1, caractérisé en ce qu'il contient une couche d'émulsion d'halogénure d'argent dans laquelle la conversion, éventuellement l'addition d'émulsion d'halogénure d'argent plus soluble et la maturation s'effectuent l'une après l'autre plus d'une fois.

9. Procédé pour la préparation d'un matériau photographique sensible à la lumière par application sur un support de couche d'une couche d'émulsion d'halogénure d'argent contenant de l'iodure, de granulométrie étroite, qui a été préparée par conversion au moins partielle à partir d'une émulsion d'halogénure d'argent de départ avec un iodure soluble dans l'eau, ledit procédé étant caractérisé en ce que l'emulsion d'halogenure d'argent de départ convertie a été mûrie en présence d'un solvant de l'halogénure d'argent éventuellement avec addition supplémentaire d'émulsion d'halogénure d'argent qui est plus facilement soluble que l'émulsion d'halogénure d'argent de départ convertie, jusqu'à ce que les fractions de l'émulsion plus solubles aient grossi sur les fractions d'émulsion d'halogénure d'argent de départ converties.

10. Utilisation du matériau selon la revendication 1, pour la production d'image photographique par exposition suivant une image et développement.

## Claims

1. A photosensitive photographic material containing at least one iodide-containing silver halide emulsion layer of narrow grain size distribution, which has been prepared from a starting silver halide emulsion using a water-soluble iodide obtaining at least partial conversion, characterised in that said photographic material contains a silver halide emulsion layer of which the converted starting silver halide emulsion has been digested, optionally with the addition of further silver halide emulsion which is more soluble than the converted starting silver halide emulsion, in the presence of a silver halide emulsion solvent, until the more soluble emulsion grains have grown on to the converted grains of the starting silver halide emulsion.

2. A material according to claim 1, characterised in that the starting emulsion contains at least 10 mol % of silver iodide.

3. A material according to claim 1, characterised in that at least 75% of the silver halide grains of the finished silver halide emulsion have a diameter which does not deviate from the mean diameter by any more than 50%.

4. A material according to claim 1, characterised in that it contains colour couplers.

5. A material according to claim 1, characterised in that the starting silver halide emulsion has a mean grain diameter of at the most 0.1 $\mu$.

6. A material according to claim 1, characterised in that a silver halide emulsion is used in the preparation of which at least one of the emulsions, i.e. the converted starting emulsion and/or the added more soluble emulsion, has been concentrated and/or freed from salt prior to the addition of the more soluble emulsion.

7. A material according to claim 1, characterised in that the molar ratio of the silver introduced in the form of the more soluble emulsion to the silver introduced in the form of the converted starting emulsion is between 0.3:1 and 30:1.

8. A material according to claim 1, characterised in that it contains a silver halide emulsion layer in which the conversion, optional addition of more soluble silver halide emulsion and digestion has been conducted more than once in succession.

9. A process for the production of a photosensitive photographic material by applying an iodide-containing silver halide emulsion layer of narrow grain size distribution, which has been prepared from a starting silver halide emulsion using a water-soluble iodide obtaining at least partial partial conversion, on to a support layer, characterised in that the converted starting silver halide emulsion is digested, optionally with the addition of further silver halide emulsion which is more soluble than the converted starting silver halide emulsion, in the presence of a silver halide solvent, until the more soluble emulsion grains have grown on to the converted silver halide emulsion grains.

10. The uses of the material according to claim 1 for the production of photographic images by imagewise exposure and development.

FIG.1

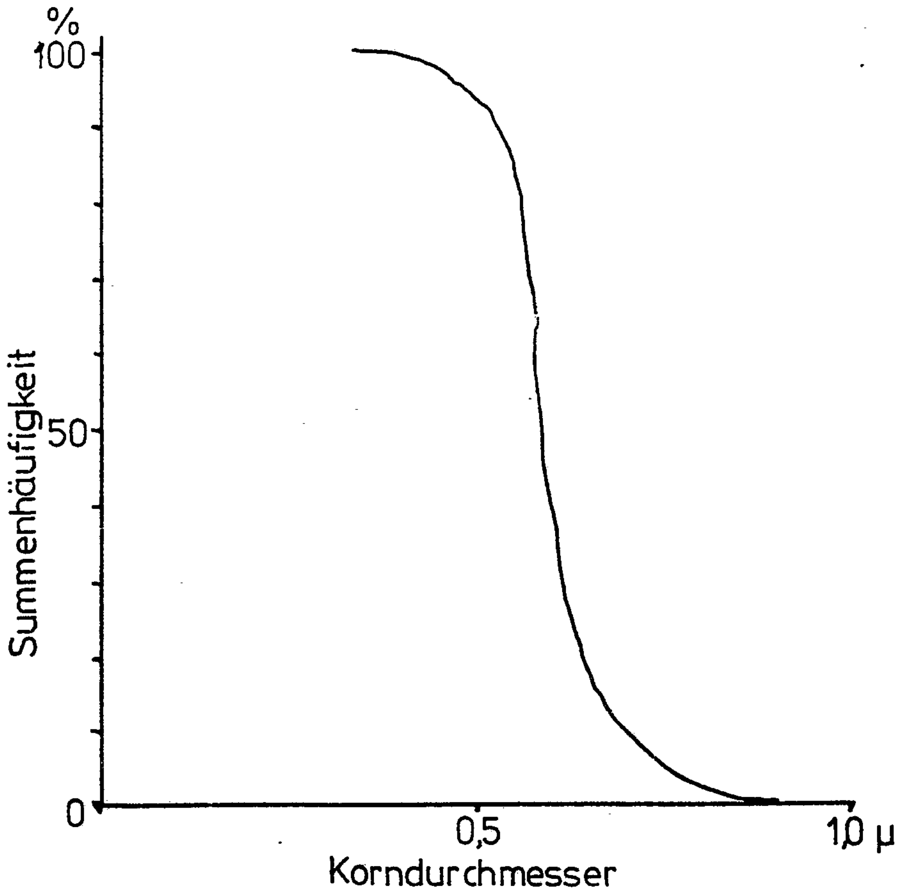
%
100
50
0
Summenhäufigkeit
0,5
1,0 µ
Korndurchmesser

FIG. 2

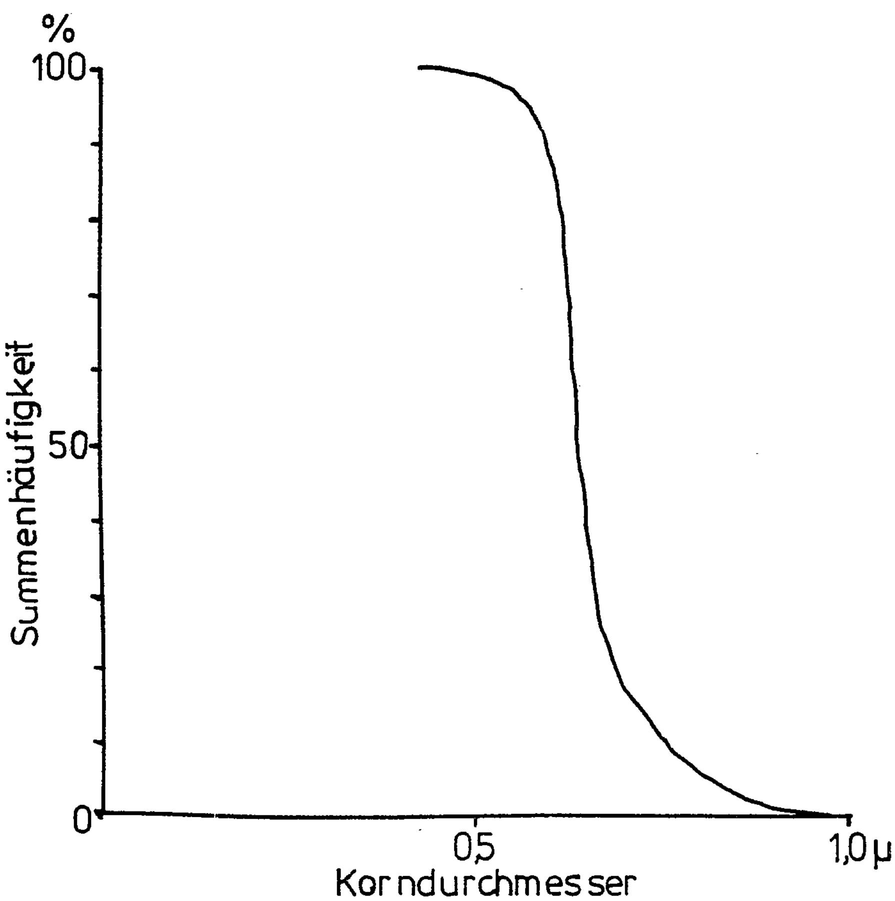
%
100
50
0
Summenhäufigkeit
0,5
1,0 µ
Korndurchmesser

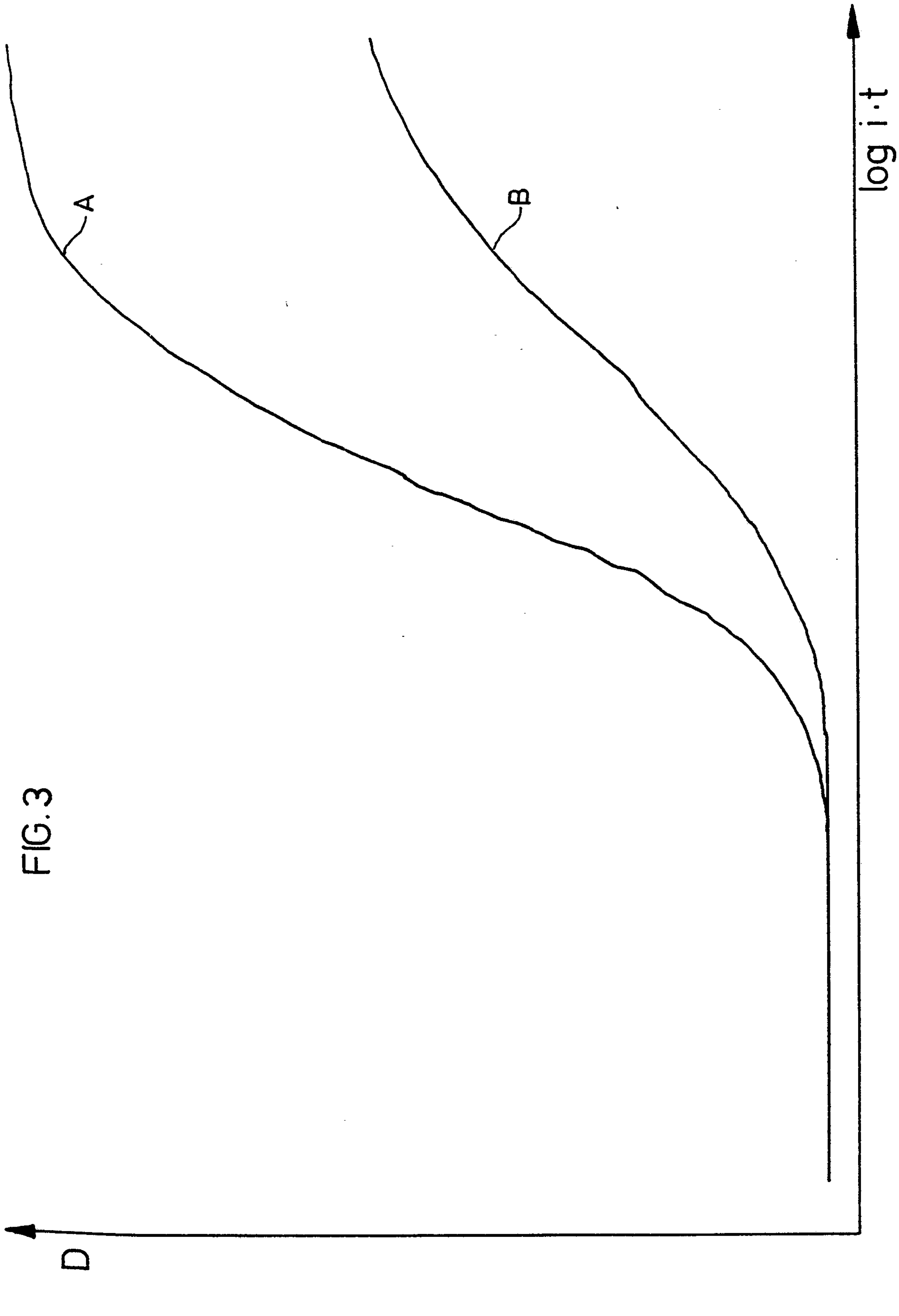


FIG. 3